# EUROPEAN PATENT APPLICATION

(11) **EP 4 056 840 A1**
(43) Date of publication of application: **14.09.2022**
(21) Application number: 21161403.7
(22) Date of filing: 09.03.2021
(51) Int. Cl.: F03D 9/19, F03D 13/25

(54) **WIND PARK PRESSURE CONTROL**

(71) Applicant: Siemens Gamesa Renewable Energy A/S, 7330 Brande (DK)
(72) Inventor: Serup, Mikkel, 7330 Brande (DK)
(74) Representative: SGRE-Association

(57) **Abstract**

The present invention relates to a wind park arrangement (100), comprising at least one wind turbine (110) for generating electrical power, wherein the wind turbine (110), comprises an electrolyzer unit (112) configured for generating a first electrolyzed fluid by using the generated electrical power. The wind park arrangement further comprises a gas pipeline (101) coupled to the wind turbine (110) for transporting the generated first electrolyzed gas, and a pressure control system (103) coupled to the electrolyzer unit (112) for controlling the pressure of the first electrolyzed fluid injected from the electrolyzer unit (112) into the gas pipeline (101).

## Description

### Field of the invention

The present invention relates to a wind park arrangement comprising at least one wind turbine with an electrolyzer unit and a respective pressure control system. Furthermore, the present invention relates to a method of operating a wind park arrangement.

### Art background

In order to generate regenerative energy, wind parks comprising a plurality of wind turbines are provided. Specifically, in order to have enough installation space for the wind turbines, large wind parks are provided offshore. However, if no energy is needed in the power grid, the power generation of the wind turbines in the wind park have to be reduced such that the wind turbines cannot operate with maximum power. On the other side, the need of hydrogen increases since more and more techniques, such as auto mobiles, uses hydrogen.

Thus, in order to increase the efficiency of the wind turbines and in order to provide the source for hydrogen, wind turbines can be equipped with an electrolyzer unit for producing hydrogen and oxygen on the basis of water, for example seawater. Hence, if less electrical power is needed in the power grid, the wind turbines may produce hydrogen in the electrolyzer unit which is driven by electrical power generated by the wind turbine.

However, since hydrogen is very volatile, it is challenging to transport the generated hydrogen to a desired destination. Furthermore, hydrogen is very reactive such that the transport of hydrogen requires a high safety standard.

Hence, there may be a need to provide a safe transportation system for hydrogen produced by wind turbines to a desired destination.

### Summary of the invention

It may be an object of the present invention to provide a wind park with an efficient and safe transportation of electrolyzed gas, such as hydrogen, to a desired destination.

This object may be solved by a wind park arrangement and a method of operating a wind park arrangement according to the subject matter of the independent claims.

According to first aspect of the present invention, a wind park arrangement is described. The wind park arrangement comprises at least one wind turbine for generating electrical power, wherein the wind turbine comprises an electrolyzer unit configured for generating a first electrolyzed fluid, e.g. gas or liquid, by using the generated electrical power. The wind park arrangement further comprises a fluid, e.g. gas, pipeline coupled to the wind turbine for transporting the generated first electrolyzed fluid, e.g. gas or liquid, and a pressure control system coupled to the electrolyzer unit for controlling the pressure of the first electrolyzed fluid, e.g. gas or liquid, injected from the electrolyzer unit into the gas pipeline.

According to a further aspect, a method for operating a wind park arrangement is described. According to the method, the method comprising, a first electrolyzed fluid, e.g. gas or liquid, is generated by using generated electrical power generated by a wind turbine, wherein the electrolyzer unit is installed in the wind turbine. The generated first electrolyzed fluid, e.g. gas or liquid, is transported in a fluid, e.g. gas or liquid, pipeline is coupled to the wind turbine. The pressure of the first electrolyzed fluid, e.g. gas or liquid, is injected from the electrolyzer unit into the gas pipeline by a pressure control system coupled to the electrolyzer unit.

The wind turbine in the wind park arrangement comprises a wind turbine tower and a respective nacelle, to which rotatable wind turbine blades are coupled. Upon rotation of the blades by wind force, a generator in the nacelle generates electrical power. The electrical power can be guided by power lines to a desired destination. The wind part arrangement may further comprise a connecting hub, an energy collector station, an oil and gas production or collector platform, or an offshore substation.

The wind turbine according to the present invention further comprises an electrolyzer unit. The electrolyzer unit is fed by an educt, such as water, and produces by the use of the electrical power generated by the wind turbine respective electrolyzed fluid, e.g. gas, such as hydrogen and oxygen. The educt may be provided by supplying pipelines or, e.g. in case of water as educt, from the sea/lake/river or the groundwater. Specifically, the electrolyzer unit generates a first electrolyzed gas, such as hydrogen, which is transported by the pipeline. Additionally, the electrolyzer unit may generate a second electrolyzed gas, such as oxygen. The second electrolyzed gas may be bled off or may be transported in a further pipeline. The wind turbine may comprise an optional storage tank for storing the gas products before being transported by the pipeline. The storage tank can be integrated in the turbine structure, e.g. the nacelle, the tower or the foundation of the wind turbine.

The electrolyzer unit may be able to generate gas with a sufficient pressure to deliver the gas to an offshore or onshore installation, so that it is not mandatory to provide respective compressors. However, also further compressors may be installed in the pipeline, in order to control the efficiency of the gas transportation and in order to control the flow direction of the gas in the main pipeline.

Furthermore, according to an approach of the present invention, the pressure control system is provided which is coupled to the electrolyzer unit for controlling the pressure of the first electrolyzed gas injected from the electrolyzer unit into the gas pipeline. Exemplary embodiments of the electrolyzer unit are described in detail further below. The pressure control system controls the pressure of the first electrolyzed gas which is injected in the pipeline. Hence, it can be controlled, that a desired flow direction, in particular from the electrolyzer unit to the pipeline can be assured because the pressure control system adjusts the pressure of the first electrolyzed gas coming from the electrolyzer unit in such a way that the pressure of the first electrolyzed gas injected in the gas pipeline has a higher pressure than the pressure of the first electrolyzed gas in the pipeline. The pressure control system may control, as described further below, for example the mass flow of the first electrolyzed gas and/or the mass flow of the educt in order to adjust the desired pressure at an injection point of the first electrolyzed gas into the pipeline.

Hence, a backflow of first electrolyzed gas from the pipeline into the electrolyzer unit can be prevented and an efficient flow of the first electrolyzed gas within the pipeline can be provided.

According to the further exemplary embodiment, the pressure control system comprises a pressure control valve arranged between the electrolyzer unit and the gas pipeline for controlling the pressure of the first electrolyzed gas injected into the gas pipeline. By installing a pressure control valve between the electrolyzer unit and the gas pipeline, for example the mass flow of the first electrolyzed gas flowing into the pipeline can be reduced or increased.

According to a further exemplary embodiment, the wind park arrangement comprises a supply pipe for supplying an educt to the electrolyzer unit. A pressure of the educt is indicative for the pressure of the first electrolyzed gas. The pressure control system comprises an educt pressure control unit for adjusting the pressure of the educt, such as water, before entering the electrolyzer unit.

Hence, the educt (water) inlet pressure into the electrolyzer unit can be adjusted very accurate at each individual wind turbine. As there is a direct relation between the inlet educt pressure and the outlet electrolyzed gas (hydrogen) pressure this will result in a controlling of the electrolyzed gas outlet pressure from the wind turbine. For example, the water electrolysis process uses electrical power from the wind turbine to separate the educt water (H2O) into the electrolyzed gasses Oxygen (O2) and Hydrogen (H2). This process can be achieved under pressure by pressurizing the inlet educt water before the electrolysis process. The pressure of the input educt (liquid) is equal to the output pressure of the electrolyzed gases gasses (O2 and H2), because the water electrolysis process itself does not affect the pressure. The electrolyzer unit may operate under pressure, because it may be easier (both technically and economically) to increase the pressure of the liquid educt before the electrolysis process compared to the gaseous electrolyzed gas (hydrogen) after the electrolysis process.

According to a further exemplary embodiment, the wind turbine comprises a desalination unit installed in the supply pipe for desalinating the educt. The desalination unit is configured for conducting a desalination of the educt and thereby removes mineral components such as salt, from the educt (such as seawater) from saline water. Hence, if the wind park arrangement is installed offshore, seawater comprising a high salt concentration can be used as educt, wherein the seawater can be desalinated and afterwards used in the electrolyzer unit. The desalination unit may use the electrical power generated by the wind turbine in order to conduct for example a vacuum distillation. Furthermore, the desalination unit may be operated on the basis of reverse osmosis or using an electrodialysis membrane.

According to a further exemplary embodiment, the educt pressure control unit comprises a educt pressure control valve. The educt pressure control valve may adjust the pressure of the educt. The pressure control valve may be an electronic valve comprising a pressure sensor and an adjustable control member which may open and close the valve dependent on the signals of the pressure sensor. Furthermore, the educt pressure control valve may be an electro-mechanic valve comprising a poppet/piston for partially closing a flow opening of the valve, wherein the piston is pre-loaded by a spring. A pressure adjustment element may adjust the preloaded force of the spring. Hence, the incoming educt presses the piston against the preloaded spring wherein depending on the adjusted preloaded force of the spring, the piston opens the flow opening of the valve to a desired size in order to control the mass flow and hence the pressure of the educt.

According to a further exemplary embodiment, the educt pressure control unit comprises a compressor for increasing the pressure of the educt. Hence, if the educt pressure, for example the incoming water pressure, is too low, the compressor may increase the educt pressure. The compressor may be driven by electrical power generated by the wind turbine.

According to a further exemplary embodiment, the pressure control system comprises an educt pressure control sensor arranged within the supply line for measuring the pressure of the educt. By providing a pressure control sensor for measuring the pressure of the educt, an exact control of the educt pressure control valve, the pressure valve between the electrolyzer and the pipeline and/or the compressor may be provided.

According to a further exemplary embodiment, the pressure control system comprises a gas pressure control sensor arranged between the electrolyzer unit and the gas pipeline for measuring the pressure of the first electrolyzed gas. By providing a pressure control sensor between the electrolyzer unit and the gas pipeline, an exact control of the educt pressure control valve, the pressure valve between the electrolyzer and the pipeline and/or the compressor may be provided. Additionally, by comparing the measured pressure of the gas pressure control sensor and the educt pressure control sensor, damages and a respective pressure loss may be measured, such that the generation of electrolyzed gas can be stopped in order to reduce the risk of accidents. Also, a flowmeter can be added to monitor the flow from the electrolyzed fluid production. The measured values can be compared to values measured by an export flowmeter to see if there are any leaks.

Hence, the system enables full monitoring and control of the offshore gas or liquid grid for energy transformation.

According to a further exemplary embodiment, the gas pipeline comprises a pressure sensor for measuring the pressure of the first electrolyzed gas in the pipeline.

According to a further exemplary embodiment, the pressure sensor is installed in the pipeline at an upstream location with respect to the injection location of the first electrolyzed gas from the wind turbine for measuring the pressure of the electrolyzed gas in the pipeline before the generated electrolyzed gas is injected into the gas pipeline. Hence, the pressure of the electrolyzed gas can be adapted to the pressure of the electrolyzed gas in the pipeline upstream of the injection location of the electrolyzed gas. Hence, the pressure of the injected electrolyzed gas from the electrolyzer unit can be adjusted with respect to the pressure of the electrolyzed gas in the pipeline upstream of the injection location, such that a desired gas flow of the injected electrolyzed gas in downstream direction can be assured.

According to a further exemplary embodiment a further pressure sensor is installed in the pipeline at a downstream location with respect to the injection location of the first electrolyzed gas from the wind turbine for measuring the pressure of the electrolyzed gas in the pipeline after the generated electrolyzed gas is injected into the gas pipeline. Hence, the pressure of the injected electrolyzed gas from the electrolyzer unit can be adjusted with respect to the pressure of the electrolyzed gas in the pipeline downstream of the injection location, such that a desired gas flow of the injected electrolyzed gas in downstream direction can be assured.

According to a further exemplary embodiment, the wind park arrangement further comprises a further gas pipeline, wherein the electrolyzer unit is configured for generating a second electrolyzed gas by using the generated electrical power. The further gas pipeline is coupled to the wind turbine for transporting the generated second electrolyzed gas. The second electrolyzed gas may be for example oxygen which is generated in the electrolyzer unit when using water as educt. Hence, both, the first electrolyzed gas in the gas pipeline and the second electrolyzed gas in the further gas pipeline can be transported to a desired location for further processing.

The pressure control system may comprise a respective further pressure control valve and a pressure sensor between the electrolyzer and the further gas pipeline in order to measure and adjust the pressure of the second electrolyzed gas. Furthermore, the further pipeline may comprise a pressure control valve and the respective pressure sensor upstream and/or downstream of an injection location of the second electrolyzed gas in the further pipeline.

According to a further exemplary embodiment, the wind park arrangement is an offshore wind park arrangement, wherein the wind turbine is an offshore wind turbine.

According to a further exemplary embodiment, the wind park arrangement comprises a plurality of wind turbines. Specifically, the wind park arrangement comprises a further wind turbine for generating electrical power, wherein the further wind turbine comprises a further electrolyzer unit configured for generating first electrolyzed gas by using the generated electrical power generated by the further wind turbine. The gas pipeline comprises a pipeline end to which the first electrolyzed gas is to be supported, wherein the further wind turbine is coupled to the gas pipeline between the wind turbine and the pipeline end such that the further first electrolyzed gas is injectable into the gas pipeline. The pressure control system is coupled to the further electrolyzer unit for controlling the pressure of the further first electrolyzed gas injected from the further electrolyzer unit into the gas pipeline.

Hence, the further wind turbine may be similarly equipped as the wind turbine described above. Hence, the further wind turbine may comprise for example the further electrolyzer unit, the further supply pipe to which for example a further educt pressure control unit is arranged. Furthermore, in the further wind turbine, the respective pressure control valves and respective pressure sensors as described for the wind turbine above may be installed as well.

Hence, by providing fully equipped wind turbines in the wind park arrangement, decentralized production of first and second electrolyzed gases can be provided. However, specific units of the wind park arrangement, such as the electrolyzer unit, the supply line and/or the educt pressure control unit may form centralized units to which the plurality of wind turbines may be coupled. For example, the electrolyzer unit of the wind turbine may additionally be coupled to the further wind turbine, such that a central supply line can be used for supplying an educt (e.g. sea water). Specifically, the central gas pipeline, to which one or a plurality of wind turbines are coupled is provided for transporting the generated first or second electrolyzed gas to a common pipeline and for further processing.

Specifically, according to an exemplary embodiment, the pressure control system is configured for adjusting the pressure of the further first electrolyzed gas injected into the gas pipeline lower than the pressure of the first electrolyzed gas injected into the gas pipeline. Hence, a desired pressure drop along the downstream direction of the first electrolyzed fluid in the gas pipeline can be provided such that the desired gas flow the direction to the pipeline end is achieved.

The concept of decentral offshore hydrogen production at each wind turbine is provided by the present invention. according to the present invention, the use of the pressure control system results in the full control of the gas (hydrogen) flow throughout in the pipeline system of the wind park arrangement. For example, a (digitally) controlled educt (water) compression unit at each wind turbine can be applied. Additionally, a pressure regulation valve unit between the educt (water) compression side and the electrolyser inlet (e.g. water inlet) helps to adjust the pressure of the first electrolyzed gas injected into the pipeline system. The flow of the first electrolyzed gas can be monitored and adjusted to optimize the gas flow in the pipeline and the output of the wind park arrangement, respectively.

For example, the pressure control system comprises a central control unit to which all pressure control valves and or further control units for controlling the first mass flow and the pressure of the educt and the first and/or second electrolyzed gas flows are coupled. Hence, by the control unit, a solution of digitally controlling a web of pressure regulators (pressure valves) on a wind park level, specifically from the water (educt) input side.

A pressure loss in the wind park arrangement has a significant impact on the wind park arrangement efficiency. With intelligent operation of the pressure control system the pressure loss can be reduced to a minimum. Due to the natural highly fluctuating production of a wind park arrangement the operating ability to control the wed of wind turbines individually at different loads is vital for maximum efficiency.

The ability to control the input pressure on the water side according to an exemplary embodiment compared to the gas side of the electrolyzer unit will result in energy savings. A pressure control device may be placed on the gas side of the electrolyzer unit, but this may require a constant higher pressure on the educt (water) input of the electrolyser unit. Hence, further pressure control is applied on the educt (water) inlet side of the electrolyzer unit, thereby e.g. reducing the pressure increase on the educt (water) side instead of controlling a pressure drop on the electrolyzed gas (hydrogen) side. This may result in a lower energy loss.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 shows a schematic view of a wind park arrangement comprising two wind turbines generating first electrolyzed gas according to an exemplary embodiment of the present invention.
Fig. 2 shows a schematic view of a pressure control valve of an educt pressure control unit according to an exemplary embodiment of the present invention.
Fig. 3 shows schematic view of a wind park arrangement comprising a plurality of wind turbines according to an exemplary embodiment of the present invention.
Fig. 4 shows a schematic pressure variation in a pipeline shown in Fig. 3 according to an exemplary embodiment of the invention.

### Detailed Description

The illustrations in the drawings are schematically. It is noted that in different figures, similar or identical elements are provided with the same reference signs.

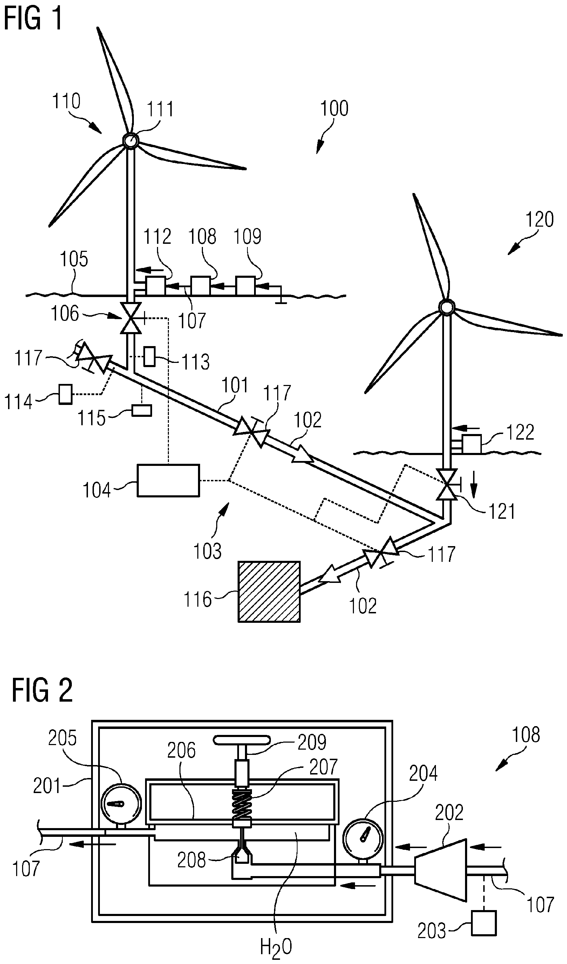

**Fig. 1** shows a wind park arrangement 100 comprising two wind turbines 110, 120 generating first electrolyzed gas according to an exemplary embodiment of the present invention.

The wind turbine 110 generates electrical power, wherein the wind turbine 110 comprises an electrolyzer unit 112 configured for generating a first electrolyzed gas by using the generated electrical power. The wind park arrangement 100 further comprises a gas pipeline 101 coupled to the wind turbine 110 for transporting the generated first electrolyzed gas, and a pressure control system 103 coupled to the electrolyzer unit 112 for controlling the pressure of the first electrolyzed gas injected from the electrolyzer unit 112 into the gas pipeline 101.

The wind turbines 110, 120 in the wind park arrangement comprise a respective wind turbine tower and a respective nacelle, to which rotatable wind turbine blades are coupled. Upon rotation of the blades by wind force, a generator 111 in the nacelle generates electrical power. The electrical power can be guided by power lines to a desired destination.

The wind turbines 110, 120 further comprise respective electrolyzer units 112, 122. The electrolyzer unit 112,122 is fed by an educt, such as water, and produces by the use of the electrical power generated by the wind turbine 110, 120 respective electrolyzed gas, such as hydrogen and oxygen. The educt may be provided by the sea water. Specifically, the electrolyzer unit 112, 122 generates a first electrolyzed gas, such as hydrogen, which is transported by the pipeline 101. Additionally, the electrolyzer unit 112, 122 may generate a second electrolyzed gas, such as oxygen. The second electrolyzed gas may be bled off or may be transported in a further pipeline (not shown).

The pressure control system 103 is provided which is coupled to the electrolyzer unit 112, 122 for controlling the pressure of the first electrolyzed gas injected from the electrolyzer unit 112, 122 into the gas pipeline 101.

The pressure control system 103 controls the pressure of the first electrolyzed gas which is injected in the pipeline 101. Hence, the desired flow direction 102, in particular from the electrolyzer unit 112, 122 to the pipeline 101 can be assured because the pressure control system 103 adjusts the pressure of the first electrolyzed gas coming from the electrolyzer unit 112, 122 in such a way that the pressure of the first electrolyzed gas injected in the gas pipeline 101 has a higher pressure than the pressure of the first electrolyzed gas in the pipeline 101. Furthermore, pipeline pressure control valves 117 coupled to the pressure control system 103 may be installed in the pipeline 101 for controlling the pressure in the pipeline 101.

The pressure control system 103 comprises a pressure control valve 106 arranged between the electrolyzer unit 112 and the gas pipeline 101 for controlling the pressure of the first electrolyzed gas injected into the gas pipeline 101. Hence, the mass flow of the first electrolyzed gas flowing into the pipeline 101 can be reduced or increased.

A supply pipe 107 supplies an educt, e.g. water, to the electrolyzer unit 112. A pressure of the educt is indicative for the pressure of the first electrolyzed gas. The pressure control system 103 comprises an educt pressure control unit 108 for adjusting the pressure of the educt, such as water, before entering the electrolyzer unit 112.

Hence, the educt (water) inlet pressure into the electrolyzer unit 112, 122 can be adjusted at each individual wind turbine 110, 120. As there is a direct relation between the inlet educt water pressure and the outlet electrolyzed gas (hydrogen and oxygen) pressure this will result in a controlling of the electrolyzed gas outlet pressure from the wind turbine 110, 120.

The wind park arrangement 100 shown in Fig. 1 may be an offshore wind park arrangement and the wind turbines 110, 120 may be for example offshore wind turbines. Hence, the wind turbine 110 comprises a desalination unit 109 installed in the supply pipe 107 for desalinating the educt, e.g. seawater, such that the seawater can be desalinated and afterwards used in the electrolyzer unit 112. The desalination unit 109 may use the electrical power generated by the wind turbine 110.

The pressure control system 103 comprises a gas pressure control sensor 113 arranged between the electrolyzer unit 112 and the gas pipeline 101 for measuring the pressure of the first electrolyzed gas. By providing a pressure control sensor 113 between the electrolyzer unit 112 and the gas pipeline 101, an exact control of the educt pressure control unit 108, the pressure valve 106 between the electrolyzer 112 and the pipeline 101 and/or an optional compressor 202 (see Fig. 2) may be provided.

The gas pipeline 101 comprises pressure sensors 114, 115 for measuring the pressure of the first electrolyzed gas in the pipeline 101.

A pressure sensor 114 may be installed in the pipeline 101 at an upstream location with respect to the flow direction 102 of the electrolyzed gas in the pipeline 101 and the injection location of the first electrolyzed gas from the wind turbine 110 for measuring the pressure of the electrolyzed gas in the pipeline 101 before the generated electrolyzed gas is injected into the gas pipeline 101. Hence, the pressure of the electrolyzed gas can be adjusted to the pressure of the electrolyzed gas in the pipeline 101 upstream of the injection location of the electrolyzed gas.

A further pressure sensor 115 may be installed in the pipeline 101 at a downstream location with respect to the injection location of the first electrolyzed gas from the wind turbine 110 for measuring the pressure of the electrolyzed gas in the pipeline 101 after the generated electrolyzed gas is injected into the gas pipeline 101. Hence, the pressure of the injected electrolyzed gas from the electrolyzer unit 112 can be adjusted with respect to the pressure of the electrolyzed gas in the pipeline 110 downstream of the injection location, such that a desired gas flow 102 of the injected electrolyzed gas in downstream direction can be assured.

The wind park arrangement 100 may further comprises a further gas pipeline (not shown), wherein the electrolyzer unit 112, 122 are configured for generating a second electrolyzed gas such as oxygen by using the generated electrical power.

The further wind turbine 120 may be similarly equipped as the wind turbine 110. The further wind turbine 120 may be installed and coupled to the gas pipeline 101 between the wind turbine 110 and a pipeline end 116. The pipeline end 116 may be coupled to a reservoir for storing the produced electrolyzed gases or to a further supply system for the produced gases. The pipeline end 116 may be coupled to an offshore substation which forms a subsea connection hub which is feeding gas from array pipelines to an export pipeline and to shore to a onshore substation or energy island in the connection grid. The onshore substation may be a delivery point, such as an onshore gas network, onshore production facility or an onshore storage. Hence, by providing fully equipped wind turbines 110, 120 in the wind park arrangement 100, decentralized production of first and second electrolyzed gases can be provided. Specifically, a plurality of wind turbines 110, 120 are coupled to the central gas pipeline 101 for transporting the generated first or second electrolyzed gas within a common pipeline 101 and for further processing.

For example, the pressure control system 103 further comprises a central control unit 104 to which all pressure control valves 106, 121, pressure sensors 113, 114, 115, 204, 205, 203 (see Fig. 2) and/or further control units for controlling the first mass flow and the pressure of the educt and the first and/or second electrolyzed gas flows (for example the compressor 202 and the pressure adjustment element 209 shown in Fig. 2) are coupled. Hence, by the control unit 104, a solution of digitally controlling a web of pressure regulators (pressure valves) on a wind park level in the pipeline 101, specifically from the water (educt) input side is provided. Furthermore, the control unit 104 includes a pressure monitoring and system control to detect leaks and operate the system to make for example a bypass of the leakage location automatically.

**Fig**. **2** shows a schematic view of a pressure control valve 201 of an educt pressure control unit 108 according to an exemplary embodiment of the present invention. The educt pressure control valve 201 may adjust the pressure of the educt, e.g. water. The pressure control valve 201 electro-mechanic valve comprising a poppet/piston 208 for partially closing a flow opening of the educt. The piston 208 is pre-loaded by a spring 207. A pressure adjustment element 209 adjust the pre-loaded force of the spring 207. The educt flows through the flow opening into a fluid chamber. The fluid chamber is separated by a diaphragm 206. The diaphragm 206 is coupled to the piston 208 and to the pre-load spring 207. The educt flows through the flow opening into the first part of the fluid chamber which is separated to the second part of the fluid chamber by the diaphragm 206. Thereby, the pressure of the educt presses against the diaphragm 206 and against the pre-loaded spring 207. Depending on the adjusted spring force of the preloaded spring 207, the diaphragm 206 is moved in the direction to or away the spring 207. Thereby, the flow opening controlled by the piston 208 and the pressure of the educt increases or decreases such that an adjustment of the desired pressure is possible. The spring force of the pre-loaded spring 207 may be adjusted by a pressure adjustment element 209 which adjusts the spring length and thereby the pre-load of the spring 207. The pressure adjustment element 209 be controlled by the control unit 104 in order to adjust the desired output pressure of the educt downstream of the educt pressure control was 201.

The pressure of the incoming educt may be measured by an inlet sensor 204. Downstream of the educt pressure control valve 201, an outlet sensor 205 is installed for measuring the pressure of the educt at the outlet of the educt pressure control valve 201.

The educt pressure control unit 108 comprises a compressor 202 for increasing the pressure of the educt. Hence, if the educt pressure, for example the incoming water pressure, is too low, the compressor 202 may increase the educt pressure. The compressor 202 may be driven by electrical power generated by the wind turbine.

The pressure control system 103 further comprises an educt pressure control sensor 203 arranged within the supply pipe 107 for measuring the pressure of the educt, specifically upstream of a compressor 22 and the educt pressure control valve 201. By providing a pressure control sensor 203 for measuring the pressure of the educt, an exact control of the educt pressure control valve 201, the pressure valve 106 between the electrolyzer and the pipeline and/or the compressor 202 may be provided.

Additionally, by comparing the measured pressure of the gas pressure control sensor 113 and the educt pressure control sensor 203, damages and a respective pressure loss may be measured, such that the generation of electrolyzed gas can be stopped in order to reduce the risk of accidents.

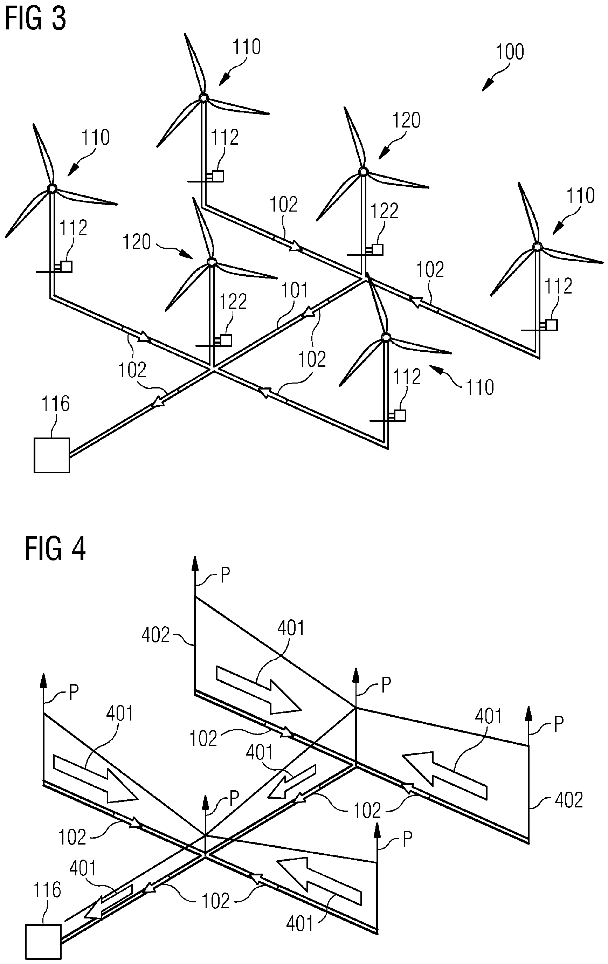

**Fig. 3** shows schematic view of a wind park arrangement 100 comprising a plurality of wind turbines 110, 120 according to an exemplary embodiment of the present invention. **Fig. 4** shows a schematic pressure variation in a pipeline 101 shown in Fig. 3.

The wind park arrangement 100 comprises a pipeline 101 which forms a grid of lines to which a plurality of wind turbines 110, 120 are coupled. The wind turbines 110, 120 comprises the respective electrolyzer units 112, 122 for generating the first and/or the second electrolyzed gas, such as hydrogen and/or oxygen, respectively. The wind turbines 110, 120 may be similar to the respective wind turbines 110, 120 described in the exemplary embodiment shown in Fig. 1. The pressure of the electrolyzed gas in the pipeline 101 can be controlled by the respective valves installed in the pipeline 101 and/or by the respective valves upstream and/or downstream of the respective electrolyzer units 112, 122.

As shown in Fig. 4 the pressure p of the electrolyzed gas in the pipeline 101 is adjusted in such a manner, that along the flow direction 102 the pressure p decreases until the electrolyzed gas reaches the pipeline end 116. Specifically, the pressure control system 103 is configured for adjusting the pressure of the electrolyzed gas injected into the gas pipeline 101 at a downstream located wind turbine 120 lower than the pressure of the electrolyzed gas injected into the gas pipeline 101 at an upstream located wind turbine 110. Hence, a desired pressure drop along the flow direction 102 of the first electrolyzed fluid in the gas pipeline can be provided such that the desired gas flow to the pipeline end 116 is achieved.

Specifically, the highest pressure p of the electrolyzed gas in the pipeline 101 is adjusted at pipeline ends 402 having the largest flow distance from the pipelines end 116. Hence, a continuously decreasing pressure level of the pressure p in the pipeline 101 is adjusted such that the desired flow direction 102 is generated and a backflow of the electrolyzed gas in counter direction of the flow direction 102 can be prevented.

Summarizing, a decentral offshore electrolyzed gas (hydrogen) production solution can be provided, wherein several offshore wind turbines 110, 120 are producing hydrogen at each individual turbine 110, 120. The hydrogen is hereafter transported in the pipeline 101 to shore, i.e. at the pipeline end 116. To limit the number of pipelines and have the best possible utilization of the pipeline 101, the hydrogen production of multiple wind turbines 110, 120 is connected in an array shown in Fig. 4. The array can be connected to other arrays and so on, resulting in a web of pipelines 101 in a hydrogen producing wind park arrangement 100. A pressure loss will occur when transporting hydrogen in a pipeline 101. The pressure loss can be reduced with larger diameter pipes 101 and smoother inner surface but never eliminated. If the hydrogen gas enters the pipeline 101 at the same pressure, the pressure loss between turbines 110, 120 may result in a blockage of hydrogen. hence, the present invention, pressure drop 401 between turbines 110, 120 can be adjusted to secure the hydrogen flow direction 102.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Wind park arrangement (100), comprising
at least one wind turbine (110) for generating electrical power,
wherein the wind turbine (110) comprises an electrolyzer unit (112) configured for generating a first electrolyzed fluid by using the generated electrical power,
a gas pipeline (101) coupled to the wind turbine (110) for transporting the generated first electrolyzed gas, and
a pressure control system (103) coupled to the electrolyzer unit (112) for controlling the pressure of the first electrolyzed fluid injected from the electrolyzer unit (112) into the gas pipeline (101).

2. Wind park arrangement (100) according to claim 1, wherein the pressure control system (103) comprises a pressure control valve (106) arranged between the electrolyzer unit (112) and the gas pipeline (101) for controlling the pressure of the first electrolyzed fluid injected into the gas pipeline (101).

3. Wind park arrangement (100) according to claim 1 or 2, further comprising
a supply pipe (107) for supplying an educt to the electrolyzer unit (112),
wherein a pressure of the educt is indicative for the pressure of the first electrolyzed gas,
wherein the pressure control system (103) comprises an educt pressure control unit (108) for adjusting the pressure of the educt before entering the electrolyzer unit (112).

4. Wind park arrangement (100) according to claim 3,
wherein the wind turbine (110) comprises a desalination unit (109) installed in the supply pipe (107) for desalinating the educt.

5. Wind park arrangement (100) according to claim 3 or 4, wherein the educt pressure control unit (108) comprises a educt pressure control valve (201).

6. Wind park arrangement (100) according to one of the claims 2 to 4,
wherein the educt pressure control unit (108) comprises a compressor (202) for increasing the pressure of the educt.

7. Wind park arrangement (100) according to one of the claims 2 to 6,
wherein the pressure control system (103) comprises an educt pressure control sensor (203) arranged within the supply line for measuring the pressure of the educt.

8. Wind park arrangement (100) according to one of the claims 2 to 7,
wherein the pressure control system (103) comprises a gas pressure control sensor (113) arranged between the electrolyzer unit (112) and the gas pipeline (101) for measuring the pressure of the first electrolyzed fluid.

9. Wind park arrangement (100) according to one of the claims 1 to 8,
wherein the gas pipeline (101) comprises a pressure sensor (114, 115) for measuring the pressure of the first electrolyzed gas in the pipeline.

10. Wind park arrangement (100) according to claim 9,
wherein the pressure sensor (114) is installed in the pipeline at an upstream location with respect to the injection location of the first electrolyzed fluid from the wind turbine (110) for measuring the pressure of the electrolyzed fluid in the pipeline before the generated electrolyzed fluid is injected into the gas pipeline (101), or
wherein the pressure sensor (115) is installed in the pipeline at a downstream location with respect to the injection location of the first electrolyzed fluid from the wind turbine (110) for measuring the pressure of the electrolyzed fluid in the pipeline after the generated electrolyzed fluid is injected into the gas pipeline (101).

11. Wind park arrangement (100) according to one of the claims 1 to 10, further comprising
a further gas pipeline,
wherein the electrolyzer unit (112) is configured for generating a second electrolyzed fluid by using the generated electrical power,
wherein the further gas pipeline is coupled to the wind turbine (110) for transporting the generated second electrolyzed gas.

12. Wind park arrangement (100) according to one of the claims 1 to 11,
wherein the wind turbine (110) is an offshore wind turbine (110) .

13. Wind park arrangement (100) according to one of the claims 1 to 12, further comprising
a further wind turbine (120) for generating electrical power,
wherein the further wind turbine (120) comprises a further electrolyzer unit (122) configured for generating first electrolyzed fluid by using the generated electrical power generated by the further wind turbine (120),
wherein the gas pipeline (101) comprises a pipeline end (116) to which the first electrolyzed fluid is to be supported, wherein the further wind turbine (120) is coupled to the gas pipeline (101) between the wind turbine (110) and the pipeline end (116) such that the further first electrolyzed fluid is injectable into the gas pipeline (101),
wherein the pressure control system (103) is coupled to the further electrolyzer unit (122) for controlling the pressure of the further first electrolyzed fluid injected from the further electrolyzer unit (122) into the gas pipeline (101).

14. Wind park arrangement (100) according to claim 13,
wherein the pressure control system (103) is configured for adjusting the pressure of the further first electrolyzed gas injected into the gas pipeline (101) lower than the pressure of the first electrolyzed fluid injected into the gas pipeline (101).

15. Method for operating a wind park arrangement (100), the method comprising
generating a first electrolyzed fluid by using generated electrical power generated by a wind turbine (110), wherein the electrolyzer unit (112) is installed in the wind turbine (110),
transporting the generated first electrolyzed fluid in a gas pipeline (101) coupled to the wind turbine (110),
controlling the pressure of the first electrolyzed fluid injected from the electrolyzer unit (112) into the gas pipeline (101) by a pressure control system (103) coupled to the electrolyzer unit (112).
